# EUROPÄISCHE PATENTSCHRIFT

(11) **EP 1 370 490 B1**
(45) Veröffentlichungstag und Bekanntmachung des Hinweises auf die Patenterteilung: **24.11.2004**
(21) Anmeldenummer: 01972012.7
(22) Anmeldetag: 06.09.2001
(51) Int. Cl.: C01B 33/107, C01B 33/02, C07F 7/16

(54) **VERFAHREN ZUR HERSTELLUNG VON CHLORSILANEN**
METHOD FOR PRODUCING CHLOROSILANES
PROCEDE DE PREPARATION DE CHLOROSILANES

(30) Priorität: 11.09.2000 DE 10044796
(43) Veröffentlichungstag der Anmeldung: 17.12.2003
(73) Patentinhaber: SOLARWORLD AKTIENGESELLSCHAFT, 53113 Bonn (DE)
(72) Erfinder: BULAN, Andreas, 40764 Langenfeld (DE); WEBER, Rainer, 51519 Odenthal (DE); MLECZKO, Leslaw, 44801 Bochum (DE)
(74) Vertreter: Rau, Albrecht
(86) Internationale Anmeldenummer: PCT/EP2001/010269
(87) Internationale Veröffentlichungsnummer: WO 2002/020405

(56) Entgegenhaltungen:
- DE-A- 4 104 422
- US-A- 4 314 908
- US-A- 5 716 590
- PATENT ABSTRACTS OF JAPAN vol. 1998, no. 01, 30. Januar 1998 (1998-01-30) & JP 09 235114 A (TOKUYAMA CORP), 9. September 1997 (1997-09-09)

## Beschreibung

Die vorliegende Erfindung betrifft ein Verfahren zur Herstellung von Chlorsilanen ausgehend von speziellem Silicium.

Unter Chlorsilanen werden Alkylchlorsilane, Arylchlorsilane und Trichlorsilan verstanden.

Trichlorsilan HSiCl₃ ist ein wertvolles Zwischenprodukt beispielsweise zur Herstellung von hochreinem Silicium, von Dichlorsilan H₂SiCl₂, von Silan SiH₄ und von Haftvermittlern.

Hochreines Silicium findet vielseitige Verwendung für elektronische und photovoltaische Zwecke, beispielsweise zur Herstellung von Solarzellen. Zur Herstellung von hochreinem Silicium wird beispielsweise metallurgisches Silicium in gasförmige Siliciumverbindungen, vorzugsweise Trichlorsilan, überführt, diese Verbindungen gereinigt und anschließend wieder in Silicium zurückgeführt.

Die Herstellung von Trichlorsilan erfolgt hauptsächlich durch Umsetzung von Silicium mit Chlorwasserstoff oder von Silicium mit Siliciumtetrachlorid, Wasserstoff und gegebenenfalls Chlorwasserstoff (Ullmann's Encyclopedia of Industrial Chemistry, 5^{th} ed. (1993), Vol. A24, 4-6). Die Reaktion von Silicium mit Siliciumtetrachlorid und Wasserstoff wird dabei in der Regel unter Einsatz von Katalysatoren durchgeführt, wobei hauptsächlich Kupferkatalysatoren zum Einsatz kommen.

So ist aus DE 41 04 422 A1 bekannt, die Umsetzung von Silicium mit Siliciumtetrachlorid und Wasserstoff in einem Wirbelbett ohne Anwendung von Druck in Gegenwart von Kupfersalzen einer niederen, aliphatischen, gesättigten Dicarbonsäure, insbesondere Kupferoxalat durchzuführen.

Ebenfalls ist es bekannt, die Reaktion von Silicium mit Siliciumtetrachlorid, Wasserstoff, und gegebenenfalls Chlorwasserstoff in Gegenwart von pulverförmigem Kupfer (Chemical Abstracts CA 101, Nr. 9576d, 1984) oder von Gemischen aus Kupfermetall, Metallhalogeniden und Bromiden oder Iodiden von Eisen, Aluminium oder Vanadium (Chemical Abstracts CA 109, Nr. 57621b, 1988) durchzuführen.

Alkyl- und Arylchlorsilane sind wichtige Ausgangsmaterialien zur Herstellung von Siliconen und werden üblicherweise nach dem dem Fachmann bekannten Müller-Rochow-Verfahren durch Umsetzung von Silicium mit Alkyl- bzw. Arylchloriden in Gegenwart von Kupfer oder Kupferverbindungen als Katalysator durchgeführt, wobei gegebenenfalls Promotoren zugesetzt werden können.

Die Herstellung von Chlorsilanen wird üblicherweise in der Wirbelschicht durchgeführt (Ullmann's Encyclopedia of Industrial Chemistry, 5^{th} ed. (1993), Vol. A24, 4 - 6). Nachteilig beim Vorgehen gemäß Stand der Technik unter Verwendung von Kupferkatalysatoren bzw. Kupfer enthaltenen Katalysatormischungen ist, dass aus der Wirbelschicht oftmals kleine Katalysator-Partikel ausgetragen werden. Dies führt dazu, dass die Ausbeuten an gewünschtem Chlorsilan im Laufe des Betriebs fallen und neuer Katalysator in den Reaktor zugegeben werden muss.

Aus der JP 09 235 114 A ist ein Verfahren zur Herstellung von Chlorsilanen bekannt, bei dem Siliciumpartikel eingesetzt sind, die mindestens auf der Partikeloberfläche Kupfersilicid aufweisen. Die Partikel werden herge stellt, indem metallisches Siliciumpulver mit Kupferchloridpartikeln homogen vermischt und in einer inerten Atmosphäre auf über 250 °C geheizt wird.

In der US 4 314 908 A ist ein Herstellungsverfahren für Methylchlorsilane durch Umsetzung von Silicium beschrieben. Hierzu wird Silicium eingesetzt, welches auf Oberflächenabschnitten der Siliciumpartikel eine im Wesentlichen gleichförmige Kupfer-Silicium-Legierung aufweist.

Es bestand daher die Aufgabe, ein Verfahren zur Herstellung von Chlorsilanen zur Verfügung zu stellen, bei dem es nicht zum unerwünschten Austrag großer Mengen des Katalysators kommt.

Überraschenderweise wurde gefunden, dass bei Einsatz eines Siliciums, das homogen verteiltes Kupfersilicid enthält, die Reaktion dieses Siliciums mit Wasserstoff, Siliciumtetrachlorid und gegebenenfalls Chlorwasserstoff zu Trichlorsilan bzw. mit Alkyl- oder Arylhalogenid zu Alkyl- bzw. Arylchlorsilan auch ohne Zugabe eines zusätzlichen Katalysators ausreichend katalysiert wird.

Gegenstand der Erfindung ist demnach ein Verfahren zur Herstellung von Chlorsilanen durch Umsetzung von Silicium, das dadurch gekennzeichnet ist, dass Silicium eingesetzt wird, das homogen verteiltes Kupfersilicid enthält.

Das erfindungsgemäße Verfahren zeichnet sich vor allem dadurch aus, dass die Bindung des Kupfers im Silcium verhindert, dass Kupfer bei einer Reaktionsführung in der Wirbelschicht als Feinstaub aus dem Reaktor ausgetragen und somit während der Reaktion ergänzt werden muss, wie dies bei Einsatz eines herkömmlichen Kupferkatalysators der Fall ist. Somit bleibt die Ausbeute an Chlorsilan im Verlaufe der Reaktionsführung weitgehend konstant.

Ein weiterer Vorteil besteht darin, dass der beim Einsatz herkömmlicher Katalysatoren erforderliche Verfahrensschritt der Mischung des Katalysators mit dem Silicium entfällt. Dies hat für die Produktionsanlage zur Herstellung von Chlorsilanen den Vorteil, dass Apparate für die Mischung von Katalysator und Silicium und Lagersilos für den Katalysator entfallen. Hierdurch wird der Investitions- und Personalaufwand geringer und eine kostengünstigere Herstellung wird ermöglicht.

Das erfindungsgemäß einzusetzende Silicium kann beispielsweise dadurch hergestellt werden, dass eine Mischung aus Silicium und der gewünschten Menge Kupfer aufgeschmolzen wird bzw. einer Siliciumschmelze Kupfer in der gewünschten Menge beigegeben wird und die Schmelze anschließend schnell abgekühlt wird. Vorzugsweise erfolgt die Zugabe der gewünschten Menge an Kupfer bereits bei der Herstellung des Siliciums.

Die schnelle Abkühlung der Schmelze kann beispielsweise durch Verdüsen der Schmelze in Luft oder durch Wassergranulation erfolgen.

Bevorzugt wird zur schnellen Abkühlung einer Siliciumschmelze und damit zur Herstellung des erfindungsgemäß einzusetzenden Siliciums die Wassergranulation eingesetzt. Bei der Wassergranulation wird flüssiges Silicium in Wasser eingetragen.

Hierdurch kühlt das Silicium extrem schnell ab. Durch Wahl der Verfahrensparameter können beispielsweise Silicium-Pellets erhalten werden. Die Wassergranulation von Silicium ist beispielsweise aus EP 522 844 A2 bekannt.

Das Kupfer liegt dann üblicherweise als homogen verteiltes Kupfersilicid im Silicium vor.

Vorzugsweise wird Silicium eingesetzt, das eine Konzentration an Kupfer in Form von homogen verteiltem Kupfersilicid im Silicium von 0,5 bis 10 Gew.-%, besonders bevorzugt von 1 bis 5 Gew.-% aufweist. Es ist jedoch auch möglich Silicium einzusetzen, das eine höhere Konzentration an Kupfer aufweist.

Das erfindungsgemäße Verfahren kann beispielsweise bei einem Druck von 1 bis 40 bar (absolut), bevorzugt von 20 bis 35 bar durchgeführt werden.

Beispielsweise wird bei Temperaturen von 400 bis 800°C, bevorzugt von 450 bis 600°C, gearbeitet.

Die Wahl des Reaktors, in dem die erfindungsgemäße Umsetzung erfolgen soll, ist nicht kritisch, solange der Reaktor unter den Reaktionsbedingungen hinreichende Stabilität aufweist und den Kontakt der Ausgangsstoffe erlaubt. Beispielsweise kann in einem Festbettreaktor, einem Drehrohrofen oder einem Wirbelbettreaktor gearbeitet werden. Die Reaktionsführung in einem Wirbelbettreaktor ist bevorzugt.

Prinzipiell ist es möglich, beim erfindungsgemäßen Verfahren einen zusätzlichen Katalysator oder Promotoren zuzugeben. Da aber das erfindungsgemäß einzusetzende Silicium eine hinreichend hohe katalytische Aktivität zeigt, ist es bevorzugt, das erfindungsgemäße Verfahren ohne Zugabe eines zusätzlichen Katalysators durchzuführen.

Nach dem erfindungsgemäßen Verfahren lassen sich Alkyl- und Arylchlorsilane und Trichlorsilane erhalten. Zur Herstellung von Alkyl- und Arylchlorsilanen wird das erfindungsgemäß einzusetzende Silicium, das homogen verteiltes Kupfersilicid enthält, mit Alkyl- bzw. Arylchlorid umgesetzt. So sind beispielsweise Alkyl- oder Arylchlorsilane zugänglich, die einen, zwei oder auch drei am Silicium gebundene Alkyl- oder Arylreste aufweisen. Beispielsweise handelt es sich bei den Alkylresten um C₁-C₈-Alkyl, vorzugsweise um Methyl, Ethyl, Propyl oder Isopropyl, besonders bevorzugt um Methyl, bei den Arylresten um C₆-C₁₀-Aryl, vorzugsweise Phenyl.

Beispielsweise wird das erfindungsgemäße Verfahren zur Herstellung von Trichlormethylsilan H₃C-SiCl₃, Dichlordimethylsilan (H₃C)₂-SiCl₂, Chlortrimethylsilan (H₃C)₃-SiCl, Trichlorphenylsilan H₅C₆-SiCl₃, Dichlordiphenylsilan (H₅C₆)₂-SiCl₂ und Chlortriphenylsilan (H₅C₆)₃-SiCl genutzt.

Bevorzugt wird das erfindungsgemäße Verfahren zur Herstellung von Trichlorsilan genutzt. Dabei wird das erfindungsgemäß einzusetzende Silicium, das homogen verteiltes Kupfersilicid enthält, mit Wasserstoff, Siliciumtetrachlorid und gegebenenfalls Chlorwasserstoff umgesetzt.

Das Molverhältnis von Wasserstoff zu Siliciumtetrachlorid kann bei der erfindungsgemäßen Umsetzung von Silicium, das homogen verteiltes Kupfersilicid enthält, mit Wasserstoff, Siliciumtetrachlorid und gegebenenfalls Chlorwasserstoff beispielsweise 0,25:1 bis 4:1 betragen. Bevorzugt ist ein Molverhältnis von 0,6:1 bis 2:1.

Bei der erfindungsgemäßen Herstellung von Trichlorsilan kann Chlorwasserstoff zugegeben werden, wobei die Menge an Chlorwasserstoff in weiten Bereichen variiert werden kann. Bevorzugt wird Chlorwasserstoff in einer solchen Menge zugegeben, dass ein Molverhältnis von Siliciumtetrachlorid zu Chlorwasserstoff von 1:0 bis 1:10, besonders bevorzugt von 1:0,5 bis 1:1 resultiert.

Bevorzugt wird die erfindungsgemäße Herstellung von Trichlorsilan in Gegenwart von Chlorwasserstoff durchgeführt.

Die erfindungsgemäße Herstellung von Trichlorsilan unter Einsatz von Silicium, das homogen verteiltes Kupfersilicid enthält, führt verglichen mit einer Reaktionsführung unter Einsatz eines Kupferkatalysators bezüglich der Ausbeute und der Zeit, bis der stationäre Zustand der Reaktion erreicht wird, zu vergleichbaren Ergebnissen. Somit kann das erfindungsgemäße Verfahren mit nahezu gleicher Ausbeute betrieben werden, hat jedoch gegenüber dem Verfahren unter Einsatz eines Kupferkatalysators die genannten Vorteile.

Nach dem erfindungsgemäßen Verfahren hergestelltes Trichlorsilan kann beispielsweise zur Herstellung von Silan und/oder Reinst-Silicium verwendet werden.

Demnach betrifft die Erfindung auch ein Verfahren zur Herstellung von Silan und/oder Reinst-Silicium ausgehend von Trichlorsilan, das nach dem oben beschriebenen Verfahren erhalten wird.

Bevorzugt wird das erfindungsgemäße Verfahren in ein Gesamtverfahren zur Herstellung von Reinst-Silicium integriert.

Besonders bevorzugt wird das erfindungsgemäße Verfahren in ein mehrstufiges Gesamtverfahren zur Herstellung von Reinst-Silicium integriert, wie es beispielsweise in "Economics of Polysilicon Process, Osaka Titanium Co., DOE/JPL 1012122 (1985), 57-78" beschrieben ist und das folgende Schritte umfasst:
a) Herstellung von Trichlorsilan,
b) Disproportionierung von Trichlorsilan unter Gewinnung von Silan,
c) Reinigung des Silans zu Reinst-Silan und
d) Thermische Zersetzung des Silans in einem Wirbelbettreaktor unter Abscheidung von Reinst-Silicium auf Silicium-Partikeln, die das Wirbelbett bilden.

Das erfindungsgemäße Verfahren wird in den folgenden Beispielen näher erläutert, wobei die Beispiele jedoch nicht als Einschränkung des Erfindungsgedankens zu verstehen sind.

### Beispiele:

### Beispiel 1 (Vergleichsbeispiel)

In einem Reaktor, bestehend aus einem Glasrohr mit einem Durchmesser von 3 cm und einer Höhe von 18 cm mit eingebauter Glasfritte, wurde Silicium der Kornfraktion 160-200 µm mit Kupfer-1-chlorid gemischt. Die Mischung enthielt danach 3 Gew.-% Kupfer. 40 g dieser Mischung wurden auf 500°C aufgeheizt und durch einen Wendelrührer bewegt. Durch diese Schüttung wurde von unten ein Gasgemisch aus Wasserstoff und Siliciumtetrachlorid im Mol-Verhältnis 1,85:1 geleitet. Die Gasgeschwindigkeit betrug 2,85 cm/s, die Verweilzeit des Gasstromes in der Silicium-Schüttung betrug 1,7 s. Die Umsetzung erfolgte bei einem Druck von 1 bar (absolut). Die Ausbeute an Trichlorsilan betrug nach 30 min ca. 5 % bezogen auf die Menge an eingesetztem Siliciumtetrachlorid, fiel nach weiteren 30 min auf 0,4 % und blieb dann konstant.

### Beispiel 2

In einem Reaktor, bestehend aus einem Glasrohr mit einem Durchmesser von 3 cm und einer Höhe von 18 cm mit eingebauter Glasfritte, wurden 40 g wassergranuliertes Silicium der Komfraktion 160-200 µm mit einem Gehalt an fein verteiltem Kupfer von 1 Gew.-% eingesetzt. Dieses Silicium wurde auf 500°C aufgeheizt und durch einen Wendelrührer bewegt. Durch diese Schüttung wurde ein Gasgemisch aus Wasserstoff und Siliciumtetrachlorid im Mol-Verhältnis 1,85:1 geleitet. Die Gasgeschwindigkeit betrug 2,85 cm/s, die Verweilzeit des Gasstromes in der Silicium-Schüttung betrug 1,7 s. Die Umsetzung erfolgte bei einem Druck von 1 bar (absolut). Die Ausbeute an Trichlorsilan betrug 12,8 % bezogen auf die Menge an eingesetztem Siliciumtetrachlorid. Die Dauer bis zum Erreichen des stationären Zustandes betrug ca. 60 min.

## Patentansprüche

1. Verfahren zur Herstellung von Chlorsilanen durch Umsetzung von Silicium, **dadurch gekennzeichnet, dass** Silicium eingesetzt wird, das homogen verteiltes Kupfersilicid derart enthält, dass im Silicium gebundenes Kupfer vorliegt.

2. Verfahren gemäß Anspruch 1, **dadurch gekennzeichnet, dass** das eingesetzte Silicium durch Wassergranulation hergestellt wird.

3. Verfahren gemäß mindestens einem der Ansprüche 1 bis 2, **dadurch gekennzeichnet, dass** die Konzentration des Kupfers im Silicium 0,5 bis 10 Gew.-% beträgt.

4. Verfahren gemäß mindestens einem der Ansprüche 1 bis 3, **dadurch gekennzeichnet, dass** die Konzentration des Kupfers im Silicium 1 bis 5 Gew.-% beträgt.

5. Verfahren gemäß mindestens einem der Ansprüche 1 bis 4, **dadurch gekennzeichnet, dass** Silicium mit Alkyl- oder Arylhalogenid zu Alkyl- oder Arylchlorsilan umgesetzt wird.

6. Verfahren gemäß mindestens einem der Ansprüche 1 bis 4, **dadurch gekennzeichnet, dass** das Silicium mit Wasserstoff, Siliciumtetrachlorid und gegebenenfalls Chlorwasserstoff zu Trichlorsilan umgesetzt wird.

7. Verfahren gemäß Anspruch 6, **dadurch gekennzeichnet, dass** die Umsetzung bei einem Druck von 1 bis 40 bar (absolut) durchgeführt wird.

8. Verfahren gemäß mindestens einem der Ansprüche 6 bis 7, **dadurch gekennzeichnet, dass** die Umsetzung bei Temperaturen von 400 bis 800 °C durchgeführt wird.

9. Verfahren gemäß mindestens einem der Ansprüche 6 bis 8, **dadurch gekennzeichnet, dass** das Molverhältnis von Wasserstoff zu Siliciumtetrachlorid 0,25:1 bis 4:1 beträgt.

10. Verfahren gemäß mindestens einem der Ansprüche 6 bis 9, **dadurch gekennzeichnet, dass** das Molverhältnis von Siliciumtetrachlorid zu Chlorwasserstoff 1:0 bis 1:10 beträgt.

11. Verfahren zur Herstellung von Silan und/oder Reinst-Silicium, **dadurch gekennzeichnet, dass** von Trichlorsilan ausgegangen wird, das unter dem Einsatz von Silicium, das homogen verteiltes Kupfersilicid derart enthält, dass im Silicium gebundenes Kupfer vorliegt, hergestellt wird.

## Claims

1. A method for producing chlorosilanes by reacting silicon, **characterized in that** the silicon used contains homogeneously distributed copper silicide such that copper is linked in the silicon.

2. A method according to Claim 1, **characterized in that** the silicon used is produced by means of water granulation.

3. A method according to at least one of Claims 1 to 2, **characterized in that** the silicon has a concentration of 0.5 to 10 weight percent copper.

4. A method according to at least one of Claims 1 to 3, **characterized in that** the silicon has a concentration of 1 to 5 weight percent copper.

5. A method according to at least one of Claims 1 to 4, **characterized in that** silicon is reacted with alkyl and/or aryl halides to alkyl and/or aryl halosilane.

6. A method according to at least one of Claims 1 to 4, **characterized in that** silicon is reacted with hydrogen, silicon tetrachloride and, if necessary, hydrogen chloride, to form trichlorosilane.

7. A method according to Claim 6, **characterized in that** the reaction is carried out at a pressure of 1 to 40 bar (absolute).

8. A method according to at least one of Claims 6 to 7, **characterized in that** the reaction is carried out at temperatures from 400 to 800°C.

9. A method according to at least one of Claims 6 to 8, **characterized in that** the mol ratio of hydrogen to silicon tetrachloride is 0.25:1 to 4:1.

10. A method according to at least one of Claims 6 to 9, **characterized in that** the mol ratio of hydrogen to silicon tetrachloride is 1:0 to 1:10.

11. A method for producing silane and/or hyper-pure silicon, **characterized in that** the starting material is trichlorosilane produced by use of silicon which contains homogeneously distributed copper silicide such that copper is linked in the silicon.

## Revendications

1. Procédé de préparation de chlorosilanes par réaction du silicium, **caractérisé en ce que** l'on met en oeuvre du silicium qui contient du siliciure de cuivre réparti de manière homogène de sorte que le cuivre se présente sous forme liée dans le silicium.

2. Procédé selon la revendication 1, **caractérisé en ce que** le silicium mis en oeuvre est préparé par granulation aqueuse.

3. Procédé selon au moins l'une des revendications 1 à 2, **caractérisé en ce que** la concentration du cuivre dans le silicium va de 0,5 à 10 % en poids.

4. Procédé selon au moins une des revendications 1 à 3, **caractérisé en ce que** la concentration du cuivre dans le silicium va de 1 à 5 % en poids.

5. Procédé selon au moins une des revendications 1 à 4, **caractérisé en ce que** l'on fait réagir le silicium avec l'halogénure d'alkyle ou d'aryle en chlorosilane d'alkyle ou chlorosilane d'aryle.

6. Procédé selon au moins une des revendications 1 à 4, **caractérisé en ce que** l'on fait réagir le silicium avec de l'hydrogène, du tétrachlorure de silicium et éventuellement, du chlorure d'hydrogène, en trichlorosilane.

7. Procédé selon la revendication 6, **caractérisé en ce que** la réaction s'effectue sous une pression de 1 à 40 bars (absolu).

8. Procédé selon au moins une des revendications 6 à 7, **caractérisé en ce que** la réaction s'effectue à des températures allant de 400 à 800°C.

9. Procédé selon au moins une des revendications 6 à 7, **caractérisé en ce que** le rapport molaire hydrogène /tétrachlorure de silicium va de 0,25/1 à 4/1.

10. Procédé selon au moins une des revendications 6 à 9, **caractérisé en ce que** le rapport molaire tétrachlorure de silicium / chlorure d'hydrogène va de 1/0 à 1/10.

11. Procédé de préparation du silane et/ou du silicium le plus pur, **caractérisé en ce que** l'on part du trichlorosilane, qui est préparé en utilisant du silicium contenant du siliciure de cuivre, réparti de manière homogène, de sorte que le cuivre se présente sous forme liée dans le silicium.
